# EUROPÄISCHE PATENTSCHRIFT

(11) **EP 2 918 373 B1**
(45) Veröffentlichungstag und Bekanntmachung des Hinweises auf die Patenterteilung: **06.07.2016**
(21) Anmeldenummer: 14159235.2
(22) Anmeldetag: 12.03.2014
(51) Int. Cl.: B23Q 3/155, B23Q 3/157

(54) **Werkzeugspeicheranordnung zur Erweiterung der Werkzeugspeicherkapazität eines Fräs-, Bohr- und/oder Dreh-Bearbeitungszentrums**
Tool storage arrangement for extending the tool storage capacity of a milling, drilling and/or turning centre
Dispositif de stockage d'outils pour l'extension de la capacité de stockage d'outils d'un centre d'usinage par forage, fraisage et/ou tournage

(43) Veröffentlichungstag der Anmeldung: 16.09.2015
(73) Patentinhaber: Maschinenfabrik Berthold Hermle AG, 78559 Gosheim (DE)
(72) Erfinder: Bernhard, Franz-Xaver, 78549 Spaichingen (DE); Uttenweiler, Dieter, 72359 Dotternhausen (DE); Kimmich, Alexander, 78056 Villingen-Schwenningen (DE)
(74) Vertreter: Hoefer & Partner Patentanwälte mbB

(56) Entgegenhaltungen:
- EP-A1- 1 604 775
- FR-A1- 2 554 034
- FR-A5- 2 115 764

## Beschreibung

Die Erfindung betrifft eine Werkzeugspeicheranordnung zur Erweiterung der Werkzeugspeicherkapazität eines vertikalen oder eines horizontalen Fräs-, Bohr- und/oder Dreh-Bearbeitungszentrums, bestehend aus mehreren separaten, funktional miteinander verketteten Speichereinheiten, in denen sich jeweils eine eigene kraftbetriebene Werkzeughandhabungseinrichtung befindet und in denen mindestens ein Werkzeugmagazinregal mit einer Vielzahl von nicht beweglichen Werkzeugablageplätzen zur Speicherung von Bearbeitungswerkzeugen untergebracht ist

Derartige Speichereinheiten sind aus der EP 1 604 775 A1 bekannt, eine derartige funktionale Verkettung aus der DE 20 60 957 A.

Unter dem Begriff - vertikales oder horizontales Bearbeitungszentrum - wird im Sinne der vorliegenden Erfindung ein Bearbeitungszentrum verstanden, bei dem die Werkstückbearbeitung durch die vertikal oder horizontal ausgerichtete Werkzeugspindel ausgeführt wird.

Unter dem Begriff - separate Speichereinheiten - werden im Sinne der vorliegenden Erfindung eigenständige Baugruppen verstanden, die ein oder mehrere Werkzeugmagazinregale enthalten, in denen eine eigene Werkzeughandhabungseinrichtung integriert ist und die alle weiteren zur Adaption notwendigen und nach dem normativen Stand der Technik erforderlichen Komponenten enthalten (z. B. Schutzumhausung). Ferner wird solch eine Speichereinheit als separat bezeichnet, weil sie dafür vorgesehen ist, für bestimmte Zwecke (z. B. Transport, Umstrukturierung) sowohl von weiteren Speichereinheiten, als auch vom Bearbeitungszentrum separiert zu werden. Im Ausführungsbeispiel ist solch eine Separierung eindeutig daran zu erkennen, dass das Bearbeitungszentrum und jede Speichereinheit auf eigenen Grundgestellen errichtet sind.

Unter dem Begriff - funktional verkettete Speichereinheiten - wird im Sinne der vorliegenden Erfindung der Zusammenschluss mehrerer separater Speichereinheiten verstanden, welche für den gleichen Zweck bestimmt sind und somit die gleiche Funktion erfüllen. Dadurch entsteht ein Gesamtsystem, das aus funktioneller Hinsicht wie eine einzige größere Speichereinheit wirkt.

Bei Bearbeitungszentren wird die Werkzeugspeicherkapazität von Bearbeitungswerkzeugen in der Regel durch die Abmessungen und Platzverhältnisse des Bearbeitungszentrums bestimmt. Daher werden in Abhängigkeit der Kundenapplikationen oft zusätzliche Speichereinheiten eingesetzt, um die Werkzeugspeicherkapazität zu vergrößern. Solche zusätzlichen Speichereinheiten übergeben die dort gelagerten Bearbeitungswerkzeuge z. B. an den maschinenintegrierten Werkzeugmagazinspeicher oder die maschinenintegrierte Werkzeugwechselvorrichtung und sind in unterschiedlichsten Ausführungen und äußeren Abmessungen bekannt. Die erforderliche Werkzeugspeicherkapazität eines Bearbeitungszentrums bzw. der zusätzlichen Speichereinheit ist dabei stark kunden- und branchenabhängig. Um auf kleiner Aufstellfläche die Werkzeugspeicherkapazität größtmöglich zu erweitern, eignen sich Speichereinheiten mit mehreren Ablageebenen besonders gut. Jedoch sind gleichermaßen solche Speichereinheiten mit nur einer vertikalen Ablageebene hinlänglich nach dem Stand der Technik bekannt und am Markt vertreten. Damit im Serienmaschinenbau möglichst wirtschaftlich produziert werden kann, gilt es ein möglichst universell anwendbares Lösungsprinzip zu schaffen, damit mit der angebotenen Produktpalette ein möglichst großes Anwendungsspektrum abgedeckt und somit für unterschiedlichste Anwendungen ein passendes System bereitgestellt werden kann. Eine wichtige Grundlage zur Umsetzung eines solchen Lösungsprinzips bildet die im Maschinenbau sehr bedeutsame Gleichteilestrategie.

Aus der EP 1 604 775 A1 ist eine Speicheranordnung bekannt, die aus einer turmförmigen Speichereinheit mit mehreren Ablageebenen und einer Vielzahl von kreisringförmig angeordneten, nicht beweglichen Werkzeugablageplätzen besteht. Im Kreismittelpunkt ist eine linear in vertikaler und horizontaler Richtung verfahrbare Werkzeughandhabungseinrichtung drehbar gelagert angebracht. Die Werkzeughandhabungseinrichtung ermöglicht den Austausch von Bearbeitungswerkzeugen mit der Werkzeugwechselvorrichtung des Bearbeitungszentrums. Dabei wird darauf hingewiesen, dass die Modularität des Systems eine beliebige Erweiterung der Werkzeugspeicherkapazität in der Höhe zulässt und auch die mindestens fünf Achtel eines Kreises umfassenden Lagertablare eine Erweiterung auf bis zu sieben Achtel zulassen. Außerdem wird erwähnt, dass es auch denkbar wäre, eine zweite Speichereinheit spiegelbildlich zur ersten an das gleiche Bearbeitungszentrum anzubinden. Ferner wird beschrieben, dass mehrere der aufgezeigten Speichereinheiten an mehreren Bearbeitungszentren über eine Krananlage, über die Dachpartie der Speicheranlagen miteinander verkettet werden können. Die Werkzeugspeicherkapazität auf eine der zuvor dargelegten Weise zu erweitern, bringt aber einige Nachteile mit sich. Die Erweiterung der Speicherkapazität, durch zusätzliche Regalsegmente auf einem Lagertablar ist auf sieben Achtel beschränkt. Weiterhin ist die Vergrößerung der Speichereinheit in deren Höhe in vielen Betriebshallen nur innerhalb enger Grenzen möglich, weil eine begrenzte Deckenhöhe vorgegeben ist oder der Verfahrbereich eines Deckenkrans nicht beeinträchtigt werden darf. Außerdem muss dabei der Verfahrbereich der vertikalen Hubachse aufwendig verlängert werden. Bei der Anbindung einer zweiten Speichereinheit an das gleiche Bearbeitungszentrum, muss das Bearbeitungszentrum eine zweite Übergabestelle für den Austausch der Bearbeitungswerkzeuge zwischen der zweiten Speichereinheit und dem Bearbeitungszentrum aufweisen. Dies stellt eine aufwendige Modifikation des Bearbeitungszentrums und des darin integrierten Werkzeugwechselsystems dar. Ebenso ist die Verkettung mehrerer Speichereinheiten durch eine übergeordnete Krananlage konstruktiv sehr aufwendig und dadurch sehr kostenintensiv. Außerdem müssen alle Speichereinheiten auf einer geraden Linie angeordnet werden, um diese mit einer linearen Krananlage zu verketten, was sich bezüglich der Aufstellanordnung der Gesamtanlage bei einer Verkettung von mehr als zwei Speichereinheiten nachteilig auswirken kann.

Aus der DE 20 60 957 A ist eine Speicheranordnung für Werkstücke und/oder Werkzeuge bekannt, die aus mehreren funktional miteinander verketteten separaten Speichereinheiten besteht. Die einzelnen Speichereinheiten bestehen aus einer Vielzahl von drehend beweglichen Ablageplätzen, die von der Außenseite be- und entladen werden können. Neben den Nachteilen betreffend der drehend beweglichen Regale, wie z. B. die große bewegte Masse in Abhängigkeit von der Anzahl der Ablageplätze und vom Gewicht der Werkstücke/Werkzeuge und dem daraus resultierenden hoch zu dimensionierenden Antrieb sowie die notwendige Fixierung der Werkstücke/Werkzeuge, weil diese einer Zentrifugalkraft ausgesetzt sind, bestehen vor allem Nachteile bezüglich der funktionalen Verkettungsweise, die in der DE 20 60 957 A aufgezeigt wird. Die funktionale Verkettung für die Speichereinheiten mit von außen zugänglichen und beweglichen Ablageplätzen erfolgt hierbei von Handhabungseinrichtungen, die sich mit den Regalen nicht mitdrehen und sich im Zwischenraum zwischen den einzelnen Speichereinheiten bzw. im Zwischenraum zwischen einer Speichereinheit und einer Bearbeitungsmaschine oder einem Be- und Entladeplatz befinden. Daraus geht hervor, dass die Übergabe eines Werkstücks/Werkzeugs von einer Speichereinheit an einen anderen Anlagenbestandteil (an eine andere Speichereinheit, an eine Bearbeitungsmaschine oder an eine Be-/Entladestation usw.) jeweils eine eigene Handhabungseinrichtung erfordert. Dies ist zum einen sehr kostenintensiv und zum anderen auch ungünstig bezüglich der Justierung der einzelnen Handhabungseinrichtungen. Eine genaue Ausrichtung der Handhabungseinrichtungen wird demnach nämlich erst möglich, wenn die verkettete Gesamtanlage am Betreiberort errichtet wurde, da jede Handhabungseirichtung auf die Ablageplätze/Übergabeplätze von zwei Anlagenbestandteilen auszurichten ist.

Ausgehend vom Stand der Technik liegt der vorliegenden Erfindung die Aufgabe zugrunde, eine möglichst einfache und kostengünstige funktionale Verkettung von mehreren separaten Speichereinheiten zu schaffen, die sowohl eine modulare Kapazitätserweiterungsmöglichkeit einer bestehenden Speichereinheit und des dazugehörigen Bearbeitungszentrums erzielen, als auch, unter Berücksichtigung der relevanten wirtschaftlichen Aspekte, die Nachteile und Probleme aus dem bekannten Stand der Technik verbessern soll.

Diese erfindungsgemäße Aufgabe wird bei einer Werkzeugspeicheranordnung zur Erweiterung der Werkzeugspeicherkapazität eines vertikalen oder eines horizontalen Fräs-, Bohr- und/oder Dreh-Bearbeitungszentrums, bestehend aus mehreren separaten, funktional miteinander verketteten Speichereinheiten, in denen sich jeweils eine eigene kraftbetriebene Werkzeughandhabungseinrichtung befindet und in denen mindestens ein Werkzeugmagazinregal mit einer Vielzahl von nicht beweglichen Werkzeugablageplätzen zur Speicherung von Bearbeitungswerkzeugen untergebracht ist, erfindungsgemäß dadurch gelöst, dass die separaten Speichereinheiten durch eine Übergabestation, die sich im Zwischenraum der Speichereinheiten befindet, räumlich miteinander verbunden sind, so dass eine Durchgangsmöglichkeit von dem Innenraum der einen Speichereinheit in den Innenraum der damit verbundenen anderen Speichereinheit entsteht, und dass die Bearbeitungswerkzeuge von einer Vorrichtung, die an der Werkzeughandhabungseinrichtung der einen Speichereinheit angebracht ist, durch die Übergabestation hindurch unmittelbar zu einer Vorrichtung, die an der Werkzeughandhabungseinrichtung einer anderen Speichereinheit angebracht ist, übergeben werden können.

Die Erfindung verbessert den bekannten Stand der Technik dahingehend, dass es erstmalig möglich ist, mehrere separate Speichereinheiten innerhalb einer Werkzeugspeicheranordnung auf einfachste Weise derart funktional miteinander zu verketten, dass keine zusätzliche Handhabungseinrichtung erforderlich ist, die lediglich dazu dient, die Bearbeitungswerkzeuge von einer Speichereinheit an die andere zu übergeben. Durch die räumliche Verbindung der Innenräume von verschiedenen Speichereinheiten und die Möglichkeit einer unmittelbaren Übergabe der Bearbeitungswerkzeuge von einer Handhabungseinrichtung an die andere, wird es auf wirtschaftlich sinnvolle Weise möglich, die Werkzeugspeicherkapazität einer abgeschlossenen Speichereinheit zu erhöhen, ohne diese Speichereinheit in ihrer Bauform und Außenmaßen bedeutend zu verändern. Die im Maschinenbau aus ökonomischer Sicht sehr wichtige Gleichteilestrategie wird daher durch die Verkettung mehrerer Speichereinheiten und speziell durch die vorliegende Erfindung unterstützt. Eine modulare Aufbauweise lässt es zu, dass jede Speichereinheit im Herstellerwerk weitestgehend montiert und justiert werden kann und der Aufwand für Montage und Inbetriebnahme im Betreiberwerk auf ein Minimum reduziert ist. Durch die Verkettung der Speichereinheiten ergibt sich außerdem die Möglichkeit, die Geometrie einer Werkzeugspeicheranordnung trotz der sehr großen Werkzeugspeicherkapazität flexibel an die Aufstellfläche der Betreiberhalle anzupassen, indem gemäß einer bevorzugten Weiterbildung die Übergabestation modular an verschiedenen Stellen der Speichereinheiten angebracht werden kann. Eine andere bevorzugte Weiterbildung der vorliegenden Erfindung lässt es außerdem sogar zu, dass auf kostengünstige Weise die Speichereinheiten von mehreren Bearbeitungszentren miteinander verkettet werden, um eine zentrale Werkzeugspeicheranordnung, aus der mehrere Maschinen mit Werkzeugen versorgt werden können, zu errichten.

So hat sich bei der vorliegenden Erfindung herausgestellt, dass es aus ökonomischer Sicht unter bestimmten Gegebenheiten vorteilhaft ist, eine vergrößerte Werkzeugspeicherkapazität durch mehrere funktional miteinander verkette Speichereinheiten, anstatt durch eine einzige größere Speichereinheit zu erzielen. Solche Gegebenheiten können z. B. sein, dass die größere Speichereinheit eine aufwendige Neuentwicklung darstellt, für die nur ein geringer Absatz zu erwarten ist, während die zu verkettenden einzelnen Speichereinheiten bereits in großer Stückzahl produziert werden. Dies ist unabhängig davon, ob die zu verkettenden einzelnen Speichereinheiten von gleichartigem oder unterschiedlichem Aufbau sind.

Die Unteransprüche haben vorteilhafte Weiterbildungen der Erfindung zum Inhalt.

Gemäß einer bevorzugten Weiterbildung sind die räumlich miteinander verbundenen Speichereinheiten gleichartig aufgebaut.

Gemäß einer bevorzugten Weiterbildung beinhalten die Speichereinheiten kreisringförmige Werkzeugmagazinregale mit einer Vielzahl von übereinander und kreisringförmig angeordneten, nicht beweglichen Werkzeugablageplätzen.

Gemäß einer bevorzugten Weiterbildung ist in jedem Werkzeugmagazinregal eine im freien kreisringförmigen Zwischenraum um eine vertikale Drehachse motorisch bewegbare Werkzeughandhabungseinrichtung angeordnet.

Gemäß einer bevorzugten Weiterbildung können eine oder mehrere Übergabestationen modular an verschiedenen Stellen der Speichereinheiten anbringbar sein, damit die räumliche Anordnung der funktional miteinander verketteten Speichereinheiten an die Platzverhältnisse beim Anlagenbetreiber anpassbar ist.

Gemäß einer bevorzugten Weiterbildung ist die an jeder Werkzeughandhabungseinrichtung angebrachte Vorrichtung zur Übergabe der Bearbeitungswerkzeuge horizontal und vertikal motorisch verfahrbar.

Gemäß einer bevorzugten Weiterbildung handelt es sich bei den an den Werkzeughandhabungseinrichtungen angebrachten Vorrichtungen zur Übergabe der Bearbeitungswerkzeuge um kraftbetriebene Werkzeuggreifer.

Gemäß einer bevorzugten Weiterbildung sind die Greiferbacken derart an jedem Werkzeuggreifer angebracht, dass zwei Werkzeuggreifer ein und das selbe Bearbeitungswerkzeug kollisionsfrei von zwei Seiten gleichzeitig an der gleichen Funktionsfläche der Werkzeugaufnahme bzw. des Bearbeitungswerkzeuges festhalten können, indem die Greiferbacken der beiden Werkzeuggreifer versetzt zueinander angeordnet sind und somit ein Bearbeitungswerkzeug von einem Werkzeuggreifer an den anderen Werkzeuggreifer übergeben werden kann.

Gemäß einer bevorzugten Weiterbildung sind die Werkzeuggreifer bei der Übergabe eines Bearbeitungswerkzeuges im Wesentlichen gegenüberliegend angeordnet. Dabei können fingerartige Greiferbacken der beiden Werkzeuggreifer kollisionsfrei ineinander eingreifen, so dass beide Werkzeuggreifer ein und das selbe Bearbeitungswerkzeug gleichzeitig an der gleichen Funktionsfläche der Werkzeugaufnahme bzw. des Bearbeitungswerkzeugs festhalten können.

Gemäß einer bevorzugten Weiterbildung sind die beiden Werkzeuggreifer, die einander ein Bearbeitungswerkzeug übergeben, identisch aufgebaut.

Gemäß einer bevorzugten Weiterbildung sind die Greiferbacken der beiden Werkzeuggreifer dazu ausgebildet, eine kegelförmige Mantelfläche zu ergreifen.

Gemäß einer bevorzugten Weiterbildung haben die miteinander verketteten Speichereinheiten die Funktion einer zentralen Werkzeugspeicheranordnung, um die Speicherkapazität mehrerer Bearbeitungszentren zu erweitern, indem mehrere der funktional verketteten Speichereinheiten dazu ausgebildet sind, die Bearbeitungswerkzeuge mit jeweils einem Bearbeitungszentrum auszutauschen.

Unter dem Begriff - gleichartige Speichereinheiten - werden im Sinne der vorliegenden Erfindung solche Speichereinheiten verstanden, die in Ihrem Aufbau ähnlich sind und daher einen großen Teil von konstruktiv gleichen Komponenten enthalten, um die Vorteile der Gleichteilestrategie ausnutzen zu können.

Unter dem Begriff - zentrale Werkzeugspeicheranordnung - wird im Sinne der vorliegenden Erfindung eine Speicheranordnung verstanden, die eine Vielzahl von Bearbeitungswerkzeugen aufnehmen und diese nach dem anwendungsbezogenen Bedarf für mehrere Bearbeitungszentren bereitstellen kann. Dadurch wird die Werkzeugspeicherkapazität der einzelnen Bearbeitungszentren vergrößert und zudem können einzelne Bearbeitungswerkzeuge ohne manuelles Eingreifen zeitversetzt in mehreren verschiedenen Bearbeitungszentren verwendet werden, was eine kostengünstigere Lagerhaltung der Bearbeitungswerkzeuge ermöglicht.

Weitere Einzelheiten, Merkmale und Vorteile der Erfindung ergeben sich aus nachfolgender Beschreibung anhand der Zeichnungen. Es zeigen:
- Figur 1: eine Draufsicht auf ein Bearbeitungszentrum mit einer erfindungsgemäß ausgebildeten Werkzeugspeicheranordnung,
- Figur 2: eine vergrößerte Darstellung der erfindungsgemäßen Werkzeugspeicheranordnung,
- Figur 3: eine Ansicht einer im Zusammenhang mit der erfindungsgemäß ausgebildeten Werkzeugspeicheranordnung verwendeten Speichereinheit,
- Figur 4: eine vergrößerte Darstellung einer Werkzeughandhabungseinrichtung in einer perspektivischen Ansicht,
- Figur 5: die Werkzeughandhabungseinrichtung nach Figur 4 in einer Draufsicht, und
- Figur 6: eine Draufsicht auf ein Bearbeitungszentrum mit einer erfindungsgemäß ausgebildeten Werkzeugspeicheranordnung nach einer dritten Ausführungsform.

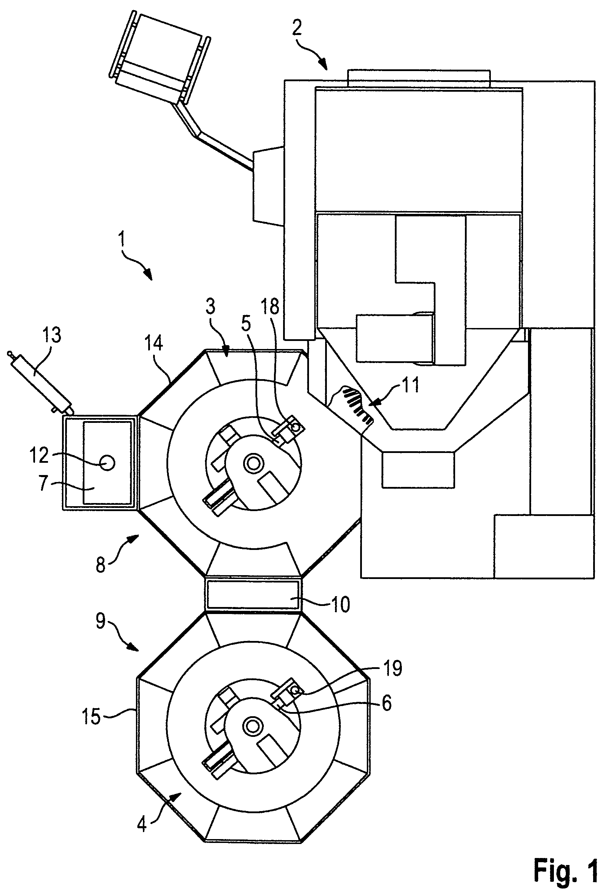

In Figur 1 ist eine Werkzeugspeicheranordnung 1 zur Erweiterung der Werkzeugspeicherkapazität eines vertikalen oder eines horizontalen Fräs-, Bohr und/oder Dreh-Bearbeitungszentrums 2 gezeigt.

Die Werkzeugspeicheranordnung 1 besitzt im vorliegenden Ausführungsbeispiel zwei gleichartig aufgebaute Speichereinheiten 8, 9, die jeweils ein kreisringförmiges Werkzeugmagazinregal 3, 4 und eine Werkzeughandhabungsvorrichtung 5, 6 aufweisen. An jeder der Werkzeughandhabungsvorrichtungen 5, 6 ist ein Werkzeuggreifer 18, 19 angeordnet. An einer der Speichereinheiten 8, 9 - vorliegend an der Speichereinheit 8 - ist eine Be- und Entladestation 7 angeordnet, mit deren Hilfe die Speichereinheiten 8, 9 bestückt werden können.

Die beiden Speichereinheiten 8, 9 sind mittels einer Übergabestation 10 räumlich miteinander verbunden, die sich im Zwischenraum zwischen den Speichereinheiten 8, 9 befindet. Infolge dieser Anordnung entsteht eine Durchgangsmöglichkeit von dem Innenraum der einen Speichereinheit 8, 9 in den Innenraum der damit verbundenen anderen Speichereinheit 8, 9.

Die Übergabestation 10 kann modular an verschiedenen Stellen der Speichereinheiten 8, 9 angebracht werden, damit die räumliche Anordnung der funktional miteinander verketteten Speichereinheiten 8, 9 an die Platzverhältnisse beim jeweiligen Anlagenbetreiber anpassbar ist.

Das Bearbeitungszentrum 2 weist ein im Wesentlichen U-förmiges Maschinengestell mit zwei Seitenwandungen auf, zwischen denen ein bewegbarer Pick-Up-Werkzeugmagazinspeicher 11 für einen Werkzeugwechsel im Pick-Up-Verfahren gelagert ist. Mindestens eine der Speichereinheiten 8, 9 kann mit diesem Pick-Up-Werkzeugmagazinspeicher 11 verbunden werden.

Die Be- und Entladestation 7 weist einen Antriebsmotor 12 sowie ein Bedienfeld 13 auf. Darüber hinaus ist jede der Speichereinheiten 8, 9 von einer Schutzumhausung 14, 15 umgeben.

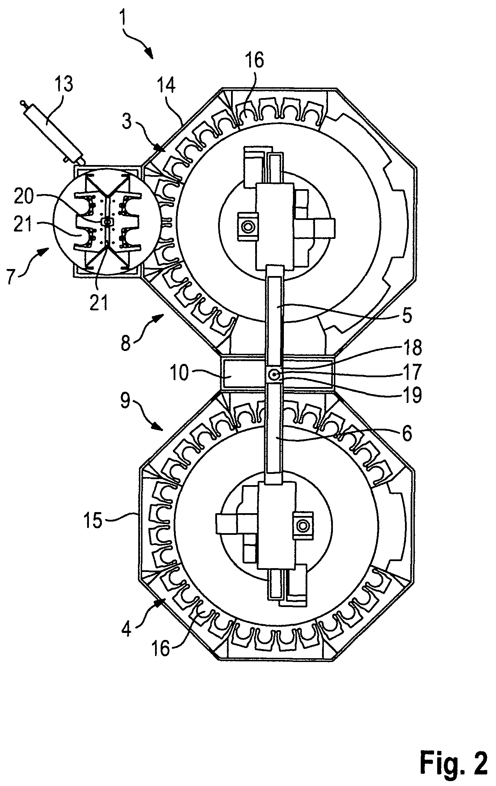

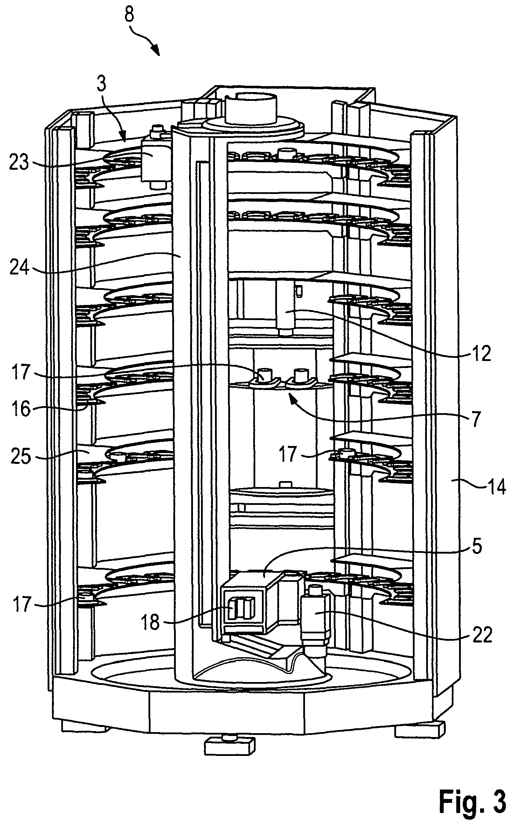

In den Figuren 2 und 3 sind weitere Einzelheiten der Speichereinheiten 8, 9 zu erkennen.

Die kreisringförmigen Werkzeugmagazinregale 3, 4 sind mit einer Vielzahl von übereinander und kreisringförmig angeordneten, nicht beweglichen Werkzeugablageplätzen 16 für Bearbeitungswerkzeuge 17 versehen.

In dem freien kreisringförmigen Zwischenraum ist in jedem Werkzeugmagazinregal 3, 4 die Werkzeughandhabungseinrichtung 5, 6 angeordnet, die um eine vertikale Drehachse motorisch bewegbar ist.

An jeder Werkzeughandhabungseinrichtung 5, 6 ist ein horizontal und vertikal motorisch verfahrbarer, kraftbetriebener Werkzeuggreifer 18, 19 für die Aufnahme und Abgabe der Bearbeitungswerkzeuge 17 angeordnet.

Die Be- und Entladestation 7 weist eine um eine vertikale Drehachse motorisch drehbare Werkzeugschleuse 20 mit einseitig oder beidseitig angeordneten, nicht beweglichen Werkzeugablageplätzen 21 auf, die durch die Drehbewegung die in der Werkzeugschleuse 20 befindlichen Bearbeitungswerkzeuge 17 in die Speichereinheit 8 einschleusen bzw. von der Speichereinheit 8 ausschleusen kann (Figur 2).

Die Be- und Entladestation 7 kann in identischer Bauweise zusätzlich oder stattdessen auch an mindestens einer der weiteren Speichereinheiten 9, 26 zur manuellen Be- und Entladung von Bearbeitungswerkzeugen 17 angebracht werden.

An jeder Werkzeughandhabungseinrichtung 5, 6 ist ein Antriebsmotor 22 für die Drehachse und ein Antriebsmotor 23 für die Vertikalachse gelagert, um die horizontal und vertikal motorisch verfahrbaren Werkzeuggreifer 18, 19 entlang eines Spindelturms 24 zu verfahren.

Unterhalb der einzelnen kreisringförmig angeordneten Werkzeugablageplätze 16 ist ein Tropfblech 25 angebracht.

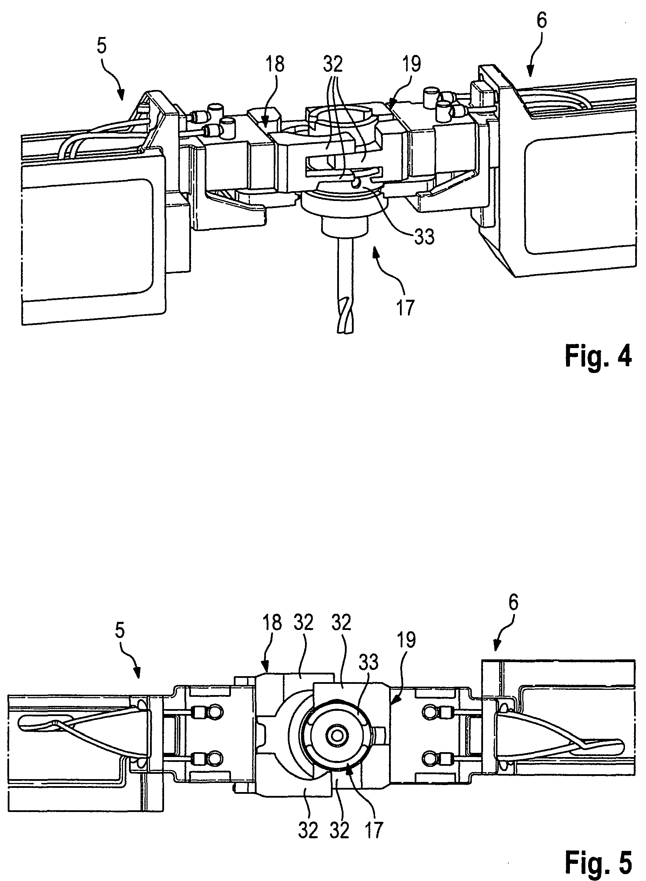

Die Figuren 4 und 5 zeigen Einzelheiten der Werkzeughandhabungseinrichtungen 5 und 6. An jeder Werkzeughandhabungseinrichtung 5, 6 ist einer der Werkzeuggreifer 18 bzw. 19 angeordnet, mit denen das Bearbeitungswerkzeug 17 inklusive der zugehörigen Werkzeugaufnahme 33 ergriffen werden kann. Die beiden identisch aufgebauten Werkzeuggreifer 18, 19 weisen Greiferbacken 32 auf, die bei der Übergabe eines Bearbeitungswerkzeuges 17 im Wesentlichen gegenüberliegend angeordnet sind. Dabei greifen die fingerartigen Greiferbacken 32 der beiden Werkzeuggreifer 18, 19 kollisionsfrei ineinander, so dass beide Werkzeuggreifer 18, 19 ein und das selbe Bearbeitungswerkzeug 17 gleichzeitig an der gleichen Funktionsfläche der Werkzeugaufnahme 33 bzw. des Bearbeitungswerkzeugs 17 festhalten können.

Alternativ können die beiden Werkzeuggreifer 18, 19 auch derart angeordnet sein, dass ein und das selbe Bearbeitungswerkzeug 17 kollisionsfrei von zwei Seiten gleichzeitig an der gleichen Funktionsfläche der Werkzeugaufnahme 33 bzw. des Bearbeitungswerkzeuges 17 festgehalten wird, indem die Greiferbacken 32 der beiden Werkzeuggreifer 18, 19 versetzt zueinander angeordnet sind und somit ein Bearbeitungswerkzeug 17 von einem Werkzeuggreifer 18, 19 an den anderen Werkzeuggreifer 18, 19 übergeben werden kann.

Die Greiferbacken 32 der beiden Werkzeuggreifer 18, 19 greifen das Bearbeitungswerkzeug 17 vorzugsweise an seiner kegelförmigen Mantelfläche.

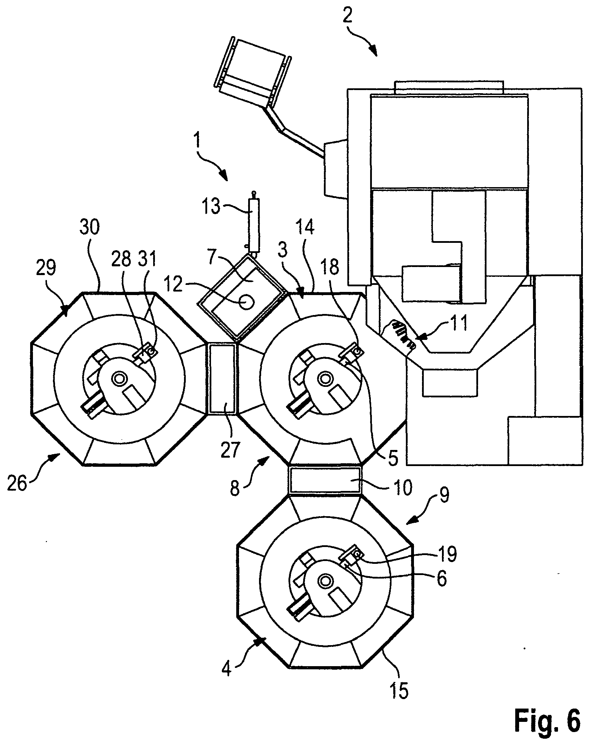

Figur 6 zeigt eine Anordnung, bei der drei Speichereinheiten 8, 9, 26 mit einem Bearbeitungszentrum 2 verbunden sind. Um auch auf die Speichereinheit 26 zugreifen zu können, ist zwischen der Speichereinheit 8 und der Speichereinheit 26 eine Übergabestation 27 vorgesehen, die in gleicher Weise ausgebildet ist, wie die Übergabestation 10.

Des Weiteren sind auch in der Speichereinheit 26, die wie die Speichereinheiten 8 bzw. 9 aufgebaut ist, eine Werkzeughandhabungseinrichtung 28 mit Werkzeuggreifern 31, ein Werkzeugmagazinregal 29 und eine Schutzumhausung 30 vorhanden.

### Bezugszeichenliste

- 1: Werkzeugspeicheranordnung
- 2: Bearbeitungszentrum
- 3: Werkzeugmagazinregal
- 4: Werkzeugmagazinregal
- 5: Werkzeughandhabungseinrichtung
- 6: Werkzeughandhabungseinrichtung
- 7: Be- und Entladestation
- 8: Speichereinheit
- 9: Speichereinheit
- 10: Übergabestation
- 11: Pick-Up-Werkzeugmagazinspeicher
- 12: Antriebsmotor Be- und Entladestation
- 13: Bedienfeld
- 14: Schutzumhausung
- 15: Schutzumhausung
- 16: Werkzeugablageplätze
- 17: Bearbeitungswerkzeuge (Werkzeugaufnahme inbegriffen)
- 18: Werkzeuggreifer
- 19: Werkzeuggreifer
- 20: Werkzeugschleuse
- 21: Werkzeugablageplätze
- 22: Antriebsmotor Drehachse
- 23: Antriebsmotor Vertikalachse
- 24: Spindelturm
- 25: Tropfblech
- 26: Speichereinheit
- 27: Übergabestation
- 28: Werkzeughandhabungseinrichtung
- 29: Werkzeugmagazinregal
- 30: Schutzumhausung
- 31: Werkzeuggreifer
- 32: Greiferbacken
- 33: Werkzeugaufnahme

## Patentansprüche

1. Werkzeugspeicheranordnung (1) zur Erweiterung der Werkzeugspeicherkapazität eines vertikalen oder eines horizontalen Fräs-, Bohr- und/oder Dreh-Bearbeitungszentrums (2), bestehend aus mehreren separaten, funktional miteinander verketteten Speichereinheiten (8, 9, 26), in dernen Innenraum sich jeweils eine eigene kraftbetriebene Werkzeughandhabungseinrichtung (5, 6, 28) befindet und in denen mindestens ein Werkzeugmagazinregal (3, 4, 29) mit einer Vielzahl von nicht beweglichen Werkzeugablageplätzen (16) zur Speicherung von Bearbeitungswerkzeugen (17) untergebracht ist, **dadurch gekennzeichnet, dass** die separaten Speichereinheiten (8, 9, 26) durch eine Übergabestation (10, 27), die sich im Zwischenraum der Speichereinheiten (8, 9, 26) befindet, räumlich miteinander verbunden sind, so dass eine Durchgangsmöglichkeit von dem Innenraum der einen Speichereinheit (8, 9, 26) in den Innenraum der damit verbundenen anderen Speichereinheit (8, 9, 26) entsteht, und dass die Bearbeitungswerkzeuge (17) von einer Vorrichtung (18, 19, 31), die an der Werkzeughandhabungseinrichtung (5, 6, 28) der einen Speichereinheit (8, 9, 26) angebracht ist, durch die Übergabestation (10, 27) hindurch unmittelbar zu einer Vorrichtung (18, 19, 31), die an der Werkzeughandhabungseinrichtung (5, 6, 28) einer anderen Speichereinheit (8, 9, 26) angebracht ist, übergeben werden können.

2. Werkzeugspeicheranordnung nach Anspruch 1, **dadurch gekennzeichnet, dass** die räumlich miteinander verbundenen Speichereinheiten (8, 9, 26) gleichartig aufgebaut sind.

3. Werkzeugspeicheranordnung nach mindestens einem der vorhergehenden Ansprüche **dadurch gekennzeichnet, dass** die Speichereinheiten (8, 9, 26) kreisringförmige Werkzeugmagazinregale (3, 4, 29) mit einer Vielzahl von übereinander und kreisringförmig angeordneten, nicht beweglichen Werkzeugablageplätzen (16) beinhalten.

4. Werkzeugspeicheranordnung nach Anspruch 3 **dadurch gekennzeichnet, dass** in jedem Werkzeugmagazinregal (3, 4, 29) eine im freien kreisringförmigen Zwischenraum um eine vertikale Drehachse motorisch bewegbare Werkzeughandhabungseinrichtung (5, 6, 28) angeordnet ist.

5. Werkzeugspeicheranordnung nach einem der vorhergehenden Ansprüche **dadurch gekennzeichnet, dass** eine oder mehrere Übergabestationen (10, 27) modular an verschiedenen Stellen der Speichereinheiten (8, 9, 26) anbringbar sind, damit die räumliche Anordnung der funktional miteinander verketteten Speichereinheiten (8, 9, 26) an die Platzverhältnisse beim Anlagenbetreiber anpassbar ist.

6. Werkzeugspeicheranordnung nach einem der vorhergehenden Ansprüche **dadurch gekennzeichnet, dass** die an jeder Werkzeughandhabungseinrichtung (5, 6, 28) angebrachte Vorrichtung zur Übergabe der Bearbeitungswerkzeuge (17) horizontal und vertikal motorisch verfahrbar ist.

7. Werkzeugspeicheranordnung nach einem der vorhergehenden Ansprüche **dadurch gekennzeichnet, dass** es sich bei den an den Werkzeughandhabungseinrichtungen (5, 6, 28) angebrachten Vorrichtungen zur Übergabe der Bearbeitungswerkzeuge (17) um kraftbetriebene Werkzeuggreifer (18, 19, 31) handelt.

8. Werkzeugspeicheranordnung nach Anspruch 7 **dadurch gekennzeichnet, dass** die Greiferbacken (32) derart an jedem Werkzeuggreifer (18, 19, 31) angebracht sind, dass zwei Werkzeuggreifer (18, 19, 31) ein und das selbe Bearbeitungswerkzeug (17) kollisionsfrei von zwei Seiten gleichzeitig an der gleichen Funktionsfläche der Werkzeugaufnahme (33) bzw. des Bearbeitungswerkzeuges (17) festhalten können, indem die Greiferbacken (32) der beiden Werkzeuggreifer (18, 19, 31) versetzt zueinander angeordnet sind und somit ein Bearbeitungswerkzeug (17) von einem Werkzeuggreifer (18, 19, 31) an den anderen Werkzeuggreifer (18, 19, 31) übergeben werden kann.

9. Werkzeugspeicheranordnung nach Anspruch 7 **dadurch gekennzeichnet, dass** die Werkzeuggreifer (18, 19, 31) bei der Übergabe eines Bearbeitungswerkzeuges (17) im Wesentlichen gegenüberliegend angeordnet sind und dabei fingerartige Greiferbacken (32) der beiden Werkzeuggreifer (18, 19, 31) kollisionsfrei ineinander eingreifen, so dass beide Werkzeuggreifer (18, 19, 31) ein und das selbe Bearbeitungswerkzeug (17) gleichzeitig an der gleichen Funktionsfläche der Werkzeugaufnahme (33) bzw. des Bearbeitungswerkzeugs (17) festhalten können.

10. Werkzeugspeicheranordnung nach einem der Ansprüche 7 bis 9 **dadurch gekennzeichnet, dass** die beiden Werkzeuggreifer (18, 19, 31), die einander ein Bearbeitungswerkzeug (17) übergeben identisch aufgebaut sind.

11. Werkzeugspeicheranordnung nach einem der Ansprüche 7 bis 10 **dadurch gekennzeichnet, dass** die Greiferbacken (32) der beiden Werkzeuggreifer (18, 19, 31) dazu ausgebildet sind, eine kegelförmige Mantelfläche greifen zu können.

12. Werkzeugspeicheranordnung nach einem der vorhergehenden Ansprüchen **dadurch gekennzeichnet, dass** die miteinander verketteten Speichereinheiten (8, 9, 26) die Funktion einer zentralen Werkzeugspeicheranordnung haben, um die Speicherkapazität mehrerer Bearbeitungszentren (2) zu erweitern, indem mehrere der funktional verketteten Speichereinheiten (8, 9, 26) dazu ausgebildet sind, die Bearbeitungswerkzeuge (17) mit jeweils einem Bearbeitungszentrum (2) auszutauschen.

## Claims

1. Tool storage arrangement for extending the tool storage capacity of a vertical or horizontal milling, drilling and/or turning center (2), consisting of a plurality of separate storage units (8, 9, 26) functionally linked to each other, the interior space of which contains an individual force-driven tool handling device (5, 6, 28), respectively, and in which a tool magazine store (3, 4, 29) including a variety of non-movable tool storage compartments (16) for storing of machining tools (17) is at least arranged,
**characterized in that** the separate storage units (8, 9, 26) are spatially connected to each other via a delivery station (10, 27) that is located in an interspace of the storage units (8, 9, 26), so that a passage way occurs from the interior space of one storage unit (8, 9, 26) to the interior space of the other storage unit (8, 9, 26) connected therewith, and
that the machining tools (17) of one device (18, 19, 31) mounted to the tool handling device (5, 6, 28) of one storage unit (8, 9, 26) can be delivered directly via a delivery station (10, 27) therethrough to a device (18, 19, 31) mounted to a tool handling device (5, 6, 28) of the other storage unit (8, 9, 26).

2. Tool storage arrangement according to claim 1, **characterized in that** the storage units (8, 9, 26) spatially linked to each other are constructed identically.

3. Tool storage arrangement according to any one of the preceding claims **characterized in that** the storage units (8, 9, 26) include circular tool magazine stores (3, 4, 29) with a variety of non-movable tool storage compartments (16) arranged one above the other and circularly.

4. Tool storage arrangement according to claim 3, **characterized in that** a tool handling device (5, 6, 28) that is motor-driven around a vertical rotation axis in a free-circular interspace is arranged in each tool magazine store (3, 4, 29).

5. Tool storage arrangement according to one of the preceding claims, **characterized in that** one or more delivery stations (10, 27) are attachable in a modular way at different places of the storage units (8, 9, 26), so that the spatial arrangement of the storage units (8, 9, 26) functionally linked to each other is adaptable to the spatial conditions of the plant operator.

6. Tool storage arrangement according to one of the preceding claims, **characterized in that** the device attached to each tool handling device (5, 6, 28) for delivering the machining tools (17) is horizontally and vertically motor-operated movable.

7. Tool storage arrangement according to one of the preceding claims, **characterized in that** it includes force-driven tool grippers (18, 19, 31) that are devices attached to the tool handling devices (5, 6, 28) for delivery the machining tools (17).

8. Tool storage arrangement according to claim 7, **characterized in that** the gripper yaws (32) are mounted to each tool gripper (18, 19, 31) in such a way, that two tool grippers (18, 19, 31) can hold collision-free the same machining tool (17) from two sides at the same time at the same function surface of the tool holder (33) or the machining tool (17), while the gripper yaws (32) of both tool grippers (18, 19, 31) are arranged offset to one another, and hence one machining tool (17) can be delivered from one tool gripper (18, 19, 31) to the other tool gripper (18, 19, 31).

9. Tool storage arrangement according to claim 7, **characterized in that** the tool grippers (18, 19, 31) are substantially arranged opposite each other when delivering one machining tool (17), and thereby finger-like gripper yaws (32) of both tool grippers (18, 19, 31) are engaged collision-free to each other, so that both tool grippers (18, 19, 31) can hold the same machining tool (17) at the same time at the same function surface of the tool holder (33) or the machining tool (17).

10. Tool storage arrangement according to one of the claims 7 to 9, **characterized in that** both tool grippers (18, 19, 31) delivering one machining tool (17) to one another are constructed identically.

11. Tool storage arrangement according to one of the claims 7 to 10, **characterized in that** the grippers yaws (32) of both tool grippers (18, 19, 31) are formed thereto, in order to be able to grip a conical shell surface.

12. Tool storage arrangement according to one of the preceding claims, **characterized in that** the storage units (8, 9, 26) linked to each other having the function of a central tool storage arrangement, in order to extend the storage capacity of a plurality of machining centers (2), while a plurality of the storage units (8, 9, 26) functionally linked are formed thereto, to exchange the machining tools (17) with one respective machining center (2).

## Revendications

1. Ensemble de stockage d'outils (1) servant à élargir la capacité de stockage d'outils d'un centre vertical ou horizontal d'usinage par fraisage, par perçage et/ou par tournage (2), constitué de plusieurs unités de stockage (8, 9, 26) séparées, enchaînés les unes aux autres de manière fonctionnelle, dans l'espace intérieur desquelles se trouve respectivement un système de manutention d'outil (5, 6, 28) fonctionnant avec une source d'énergie et où au moins un rayonnage de magasin d'outils (3, 4, 29) comprenant une pluralité d'emplacements de rangement d'outils (16) non mobiles servant à stocker des outils d'usinage (17) est abrité, **caractérisé en ce que** les unités de stockage (8, 9, 26) séparées sont reliées les unes aux autres spatialement par une station de transfert (10, 27), qui se trouve dans l'espace intermédiaire des unités de stockage (8, 9, 26) de sorte qu'une possibilité de passage de l'espace intérieur de l'une des unités de stockage (8, 9, 26) dans l'espace intérieur de l'autre unité de stockage (8, 9, 26) reliée à la première est créée, et **en ce que** les outils d'usinage (17) peuvent être transférés depuis un dispositif (18, 19, 31), qui est installé au niveau du système de manutention d'outil (5, 6, 28) de l'une des unités de stockage (8, 9 26) directement à un dispositif (18, 19, 31), qui est installé au niveau du système de manutention d'outil (5, 6, 28) d'une autre unité de stockage (8, 9, 26) en passant par la station de transfert (10, 27).

2. Ensemble de stockage d'outils selon la revendication 1, **caractérisé en ce que** les unités de stockage (8, 9, 26) reliées les unes aux autres spatialement présentent une structure de type similaire.

3. Ensemble de stockage d'outils selon au moins l'une quelconque des revendications précédentes, **caractérisé en ce que** les unités de stockage (8, 9, 26) comportent des rayonnages de magasin d'outils (3, 4, 29) de forme circulaire comprenant une pluralité d'emplacements de rangement d'outil (16) non mobiles disposés les uns au-dessus des autres et de manière circulaire.

4. Ensemble de stockage d'outils selon la revendication 3, **caractérisé en ce qu'**un système de manutention d'outil (5, 6, 28) pouvant être déplacé de manière motorisée autour d'un axe de rotation vertical dans l'espace intermédiaire libre de forme circulaire est disposé dans chaque rayonnage de magasin d'outils (3, 4, 29).

5. Ensemble de stockage d'outils selon au moins l'une quelconque des revendications précédentes, **caractérisé en ce qu'**une ou plusieurs stations de transfert (10, 27) peuvent être installées de manière modulaire au niveau de différents endroits des unités de stockage (8, 9, 26) afin que l'agencement spatial des unités de stockage (8, 9, 26) enchaînées les unes aux autres de manière fonctionnelle puisse être adapté à l'espace disponible chez l'exploitant de l'installation.

6. Ensemble de stockage d'outils selon l'une quelconque des revendications précédentes, **caractérisé en ce que** le dispositif installé au niveau de chaque système de manutention d'outil (5, 6, 28) peut être déplacé de manière motorisée horizontalement et verticalement aux fins du transfert des outils d'usinage (17).

7. Ensemble de stockage d'outils selon l'une quelconque des revendications précédentes, **caractérisé en ce que** les dispositifs installés au niveau des systèmes de manutention d'outil (5, 6, 28) servant au transfert des outils d'usinage sont des préhenseurs d'outil (18, 19, 31) entraînés par une source d'énergie.

8. Ensemble de stockage d'outils selon la revendication 7, **caractérisé en ce que** les mâchoires de système de préhenseur (32) sont installées au niveau de chaque préhenseur d'outil (18, 19, 31) de telle manière que deux préhenseurs d'outil (18, 19, 31) peuvent maintenir un seul et même outil d'usinage (17) sans collision par deux côtés de manière simultanée au niveau de la surface fonctionnelle similaire du logement d'outil (33) ou de l'outil d'usinage (17) du fait que les mâchoires de préhenseur (32) des deux préhenseurs d'outil (18, 19, 31) sont disposées de manière décalée les unes par rapport aux autres et qu'un outil d'usinage (17) peut ce faisant être transféré d'un préhenseur d'outil (18, 19, 31) à l'autre préhenseur d'outil (18, 19, 31).

9. Ensemble de stockage d'outils selon la revendication 7, **caractérisé en ce que** les préhenseurs d'outil (18, 19, 31) sont disposés essentiellement de manière à se faire face lors du transfert d'un outil d'usinage (17), et **en ce que** ce faisant des mâchoires de préhenseur (32) de type doigts des deux préhenseurs d'outil (18, 19, 31) viennent en prise les unes avec les autres sans collision de sorte que les deux préhenseurs d'outil (18, 19, 31) peuvent maintenir un seul et même outil d'usinage (17) de manière simultanée au niveau de la surface fonctionnelle similaire du logement d'outil (33) ou de l'outil d'usinage (17).

10. Ensemble de stockage d'outils selon l'une quelconque des revendications 7 à 9, **caractérisé en ce que** les deux préhenseurs d'outil (18, 19, 31) qui transfèrent l'un à l'autre un outil d'usinage (17) présentent une structure identique.

11. Ensemble de stockage d'outils selon l'une quelconque des revendications 7 à 10, **caractérisé en ce que** les mâchoires de préhenseur (32) des deux préhenseurs d'outil (18, 19, 31) sont réalisées afin de pouvoir saisir une surface extérieure de forme conique.

12. Ensemble de stockage d'outils selon l'une quelconque des revendications précédentes, **caractérisé en ce que** les unités de stockage (8,9, 16) enchaînées les unes aux autres ont la fonction d'un ensemble de stockage d'outils central afin d'élargir la capacité de stockage de plusieurs centres d'usinage (2) du fait que plusieurs unités de stockage (8, 9, 26) enchaînées de manière fonctionnelle sont réalisées dans le but de remplacer les outils d'usinage (17) par respectivement un centre d'usinage (2).
